# EUROPÄISCHE PATENTANMELDUNG

(11) **EP 1 342 614 A2**
(43) Veröffentlichungstag der Anmeldung: **10.09.2003**
(21) Anmeldenummer: 03002863.3
(22) Anmeldetag: 08.02.2003
(51) Int. Cl.: B60N 2/62

(54) **Fahrzeugsitz mit Fussstütze**

(30) Priorität: 04.03.2002 DE 10209186
(71) Anmelder: DaimlerChrysler AG, 70567 Stuttgart (DE)
(72) Erfinder: Flory, Gerhard, 71032 Boeblingen (DE); Franzmann, Günther, 67806 Rockenhausen (DE); Gaus, Hermann, Prof., 70619 Stuttgart (DE); Geisel, Thomas, 72108 Rottenburg (DE); Hassler, Klaus, 67735 Mehlbach (DE); Jung, Christoph, 71083 Herrenberg (DE); Leucht, Rainer, 73666 Baltmannsweiler (DE); Utsch, Heiko, 67657 Kaiserslautern (DE); Weber, Erik, 66885 Bedesbach (DE); Windham, Norman, 67725 Börrstadt (DE)

(57) **Zusammenfassung**

Die Erfindung betrifft einen Fahrzeugsitz (1) mit einer von einer Verstauposition in eine Gebrauchsposition verbringbaren Unterschenkelstütze (3) und einer Fußstütze (4) auf.

Um eine komfortable Abstützung bei einfacher Bedienung zu erreichen, weist die Fußstütze (4) eine ausklappbare Fußplatte (41) auf, die in Verstauposition parallel und in Gebrauchsposition senkrecht zu der Unterschenkelstütze (3) angeordnet ist und mit einem Kraftspeicher (42) zusammenwirkt. Der Kraftspeicher (42) wird beim Ausklappen von der Verstauposition in die Gebrauchsposition aufgeladen.

## Beschreibung

Die Erfindung betrifft einen Fahrzeugsitz nach dem Oberbegriff des Anspruchs 1.

Ein solcher Fahrzeugsitz ist aus der EP 0 539 444 B1 bekannt. Dieser Fahrzeugsitz weist eine Fußstütze auf, die von einer unter dem Sitz angeordneten Verstauposition in eine Gebrauchsposition klappbar ist. Die Fußstütze weist eine in mehrere Teilsegmente unterteilte Auflagefläche für die Unterschenkel eines Sitzenden auf. Einzelne Segmente dieser Fläche können aufgestellt werden, um eine Auflagefläche zum Abstützen der Füße zu erhalten. Diese Fußstütze benötigt in der Verstauposition jedoch relativ viel Bauraum. Zudem ist die Abstützung für den Sitzenden wenig komfortabel und umständlich zu bedienen.

Das deutsche Gebrauchsmuster G 92 00 777.5 zeigt einen Omnibussitz mit einer Fußstütze. Die Fußstütze ist über ein von einer Gasfeder beaufschlagtes Parallelogrammlenkergestänge an dem Sitzkissen des Omnibussitzes angelenkt. Über das Parallelogrammlenkergestänge kann die Fußstütze von einer unterhalb des Sitzkissens angeordneten Verstauposition in eine Gebrauchsposition geklappt werden. Nachteilig ist hier, dass die Fußstütze ebenfalls in der Verstauposition relativ viel Bauraum benötigt und bei für den Sitzenden wenig komfortabler Abstützung relativ umständlich zu bedienen ist.

Es ist Aufgabe der vorliegenden Erfindung einen Fahrzeugsitz zu schaffen, der kompakt ausgebildet ist, eine komfortable Abstützung der Beine und Füße aufweist und einfach zu bedienen ist.

Diese Aufgabe wird erfindungsgemäß durch einen Fahrzeugsitz nach den Merkmalen des Anspruchs 1 gelöst.

Der Fahrzeugsitz weist eine Fußstütze mit Fußplatte auf, die am unteren Ende einer Unterschenkelstütze angeordnet ist. Die Unterschenkelstütze weist eine vorzugsweise gepolsterte Auflagefläche zur Abstützung der Unterschenkel eines Sitzenden auf. Die Fußplatte ist um eine quer zu der Unterschenkelstütze verlaufende Drehachse klappbar, so dass sie von einer in etwa parallel zu der Unterschenkelstütze angeordneten Verstauposition in eine in etwa senkrecht zu der Unterschenkelstütze angeordnete Gebrauchsposition schwenkbar ist. In der Verstauposition benötigt die Fußstütze nur sehr wenig Bauraum. In der Gebrauchsposition bietet die Fußstütze eine komfortable Abstützung und Auflage für die Füße des Sitzenden. Für eine einfache und komfortable Bedienung weist die Fußstütze einen Kraftspeicher auf, der beim Ausklappen der Fußplatte von der Verstauposition aufgeladen wird.

Es ist vorgesehen, dass die Fußplatte eine Rastvorrichtung aufweist und in Gebrauchsposition verrasten kann. Die Rastvorrichtung hält die Fußplatte so gegen die Kraft des Kraftspeichers. Nach dem Lösen der Rastvorrichtung wird diese unter Entladung des Kraftspeichers selbsttätig in Verstauposition geschwenkt. Dadurch ergibt sich eine einfache Bedienung der Fußplatte. Zugleich beansprucht die Fußstütze in Verstauposition ein geringes Bauvolumen.

Die Fußplatte ist mit einer Unterschenkelstütze verbunden, die automatisch angetrieben verstellt werden kann. Es ist vorgesehen, die Länge und/oder Neigung der Unterschenkelstütze automatisch angetrieben zu verstellen. Dabei kann die Unterschenkelstütze über einen Antrieb stufenlos von der Verstauposition in eine Gebrauchsposition und zurück gefahren werden. Durch das Verfahren der Länge und/oder Neigung der Unterschenkelstütze kann die Position der Fußstütze an die Körperabmessungen des Sitzenden angepasst und/oder an die gewünschte Gebrauchsposition gefahren werden.

In einer Ausführung ist vorgesehen, dass die Rastvorrichtung eine Überlastsicherung aufweist. Sie kann überdrückbar ausgebildet sein. Kommt die ausgeklappte Fußplatte z. B. beim Verstellen der Unterschenkelstütze in Kontakt mit einem Hindernis, kann die Rastvorrichtung überdrückt werden und der Kraftspeicher kann die Fußplatte in die Verstauposition zurückklappen. Dadurch wird ein versehentliches Einklemmen oder Beschädigen von Gegenständen und/oder der Fahrzeuginsassen vermieden.

Um bei einem Crash die Verletzungsgefahr zu reduzieren ist vorgesehen, dass die Fußplatte eine Sollbruchstelle aufweist. Diese ist vorzugsweise an der Verbindung zur Unterschenkelstütze angeordnet. Treffen die Füße des Sitzenden infolge eines Crash mit großer Kraft auf die Fußplatte, so kann diese an der Sollbruchstelle nachgeben und/oder abbrechen bevor die Füße verletzt werden.

In einer Ausführung ist vorgesehen, dass die Fußplatte mit Bezugsstoff und/oder Teppich überzogen und/oder gepolstert ist bzw. eine Einlage aus Bezugsstoff und/oder Teppich aufweist. So kann die Fußplatte in das Design des Innenraumes integriert werden und weist einen angenehmes Aussehen auf. Gleichzeitig wird die Fußplatte durch den Bezugsstoff und/oder Teppich gepolstert, so dass die Füße komfortabel abgestützt werden.

Es ist möglich, den erfindungsgemäßen Fahrzeugsitz in Personenkraftwagen, Omnibussen, sowie Wasser- oder Schienenfahrzeugen zu verwenden. Auch eine Verwendung des erfindungsgemäßen Fahrzeugsitzes als bequemer Passagiersessel in Flugzeugen ist vorgesehen.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:
- **Figur 1**:: eine Darstellung des Fahrzeugsitzes mit einer Unterschenkelstütze und Fußstütze in einer Gebrauchsposition,
- **Figur 2:**: eine Schnittdarstellung der Unterschenkelstütze und der Fußstütze in Verstauposition,
- **Figur 3:**: den schematischen Aufbau der Fußstütze,
- **Figur 4:**: eine Explosionsdarstellung einzelner Teile der Fußstütze.

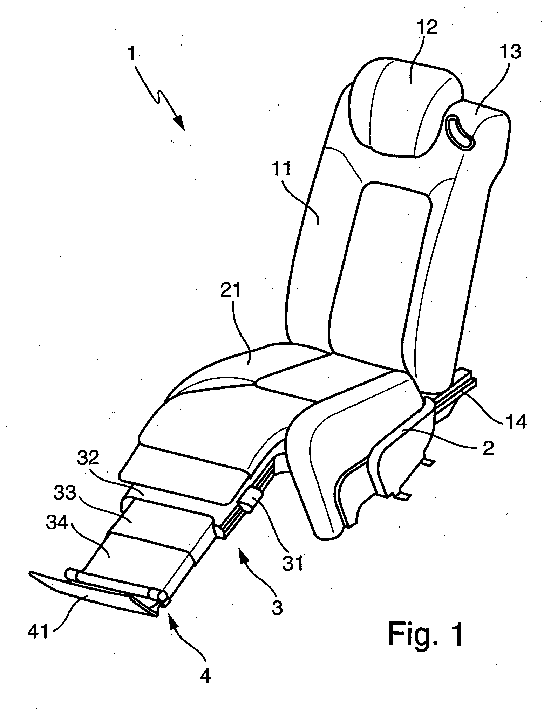

Die **Figur 1** zeigt den Fahrzeugsitz 1 mit Fußstütze 4. Er weist eine Lehne 11 mit Kopfstütze 12 und ein Sitzkissen2 mit Unterschenkelstütze 3 auf. Der Fahrzeugsitz 1 ist über Schienen 14 in einem Fahrzeug, z.B. im Fond eines Personenkraftwagens, verschiebbar gelagert. In der Lehne 11 ist eine Gurtaufnahme 13 für einen Dreipunktgurt integriert. Die Lehne 11 und das Sitzkissen 2 weisen je ein Polster mit einem Bezugsstoff, vorzugsweise Leder, auf. Das Sitzkissenpolster 21 polstert das Sitzkissen und die Unterschenkelstütze 3 ab und ist durchgehend ausgebildet. Es bildet eine zusammenhängende gepolsterte Sitzfläche aus.

Die Unterschenkelstütze 3 ist in der in Figur 1 dargestellten Ruhe- oder Gebrauchsposition nach vorne ausgestellt. Sie wurde nach vorne oben geschwenkt und auseinandergefahren, um ihre Auflagefläche für die Unterschenkel zu vergrößern. Die Unterschenkelstütze weist ein dreiteiliges Teleskop mit einem oberen Teleskopelement 32, einem mittleren Teleskopelement 33 und einem unteren Teleskopelement 34 auf. Zum Variieren der Länge der Unterschenkelstütze 3 können die Teleskopelemente 32, 33, 34 über einen elektrischen Antrieb teleskopiert werden. An dem unteren Ende der Unterschenkelstütze 3 ist die Fußstütze 4 angeordnet. Sie ist mit dem unteren Teleskopelement 34 verbunden und weist eine Fußplatte 41 auf, die in die Gebrauchsposition ausgeklappt ist und eine komfortable Abstützung für die Füße bietet. Die Fußplatte 41 ist um eine quer zu der Unterschenkelstütze 3 verlaufende Drehachse schwenkbar und steht in Gebrauchsposition in etwa senkrecht zu der Unterschenkelstütze 3.

Der Fahrzeugsitz 1 weist neben der in Figur 1 dargestellten Ruhe- bzw. Liegeposition noch weitere Sitzpositionen, vorzugsweise auch eine aufrechte Sitzposition mit eingezogener Unterschenkelstütze 3 und eingeklappter Fußstütze 4 auf.

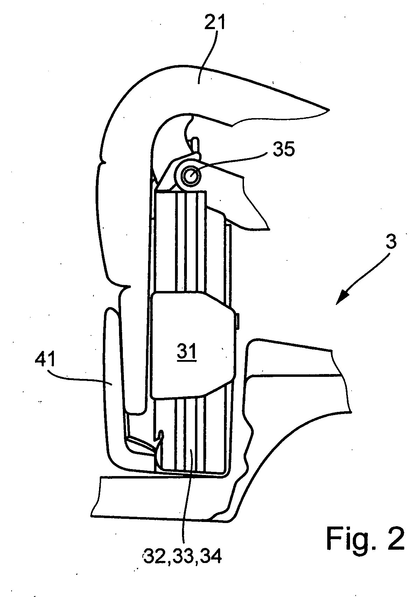

Die Verstauposition mit eingezogener Unterschenkelstütze 3 und eingeklappter Fußstütze 4 ist in der **Figur 2** gezeigt. Die Teleskopelemente 32, 33, 34 der Unterschenkelstütze 3 sind ineinandergeschoben und am vorderen Ende des Sitzkissens 2 ungefähr senkrecht nach unten weisend angeordnet. Am oberen Teleskopelement 32 ist ein Neigungseinsteller 35 angeordnet, der die Unterschenkelstütze 3 mit dem Sitzkissen 2 verbindet. Der Neigungseinsteller 35 weist einen Elektromotor zum Verstellen der Neigung der Unterschenkelstütze 3 auf.

Die Fußplatte 41 ist parallel zu der Unterschenkelstütze 3 angeordnet und bildet zusammen mit dem Sitzpolster 21 eine ebene Frontfläche aus, die den Fahrzeugsitz nach vorne hin abschließt. Die Rückseite der Fußplatte 41 fluchtet mit der Oberseite des Sitzpolsters 21, so dass der Fahrzeugsitz keine vorstehenden Kanten aufweist und/oder die Fußplatte 41 nicht versehentlich vorgeklappt werden kann. Die Unterschenkelstütze 3 und die Fußstütze 4 ist in der Stauposition an dem vorderen Bereich des Sitzkissens 2 anliegend angeordnet. Diese Verstauposition ist platzsparend und beeinträchtigt den im Fahrzeug vorhandenen Fußraum nicht.

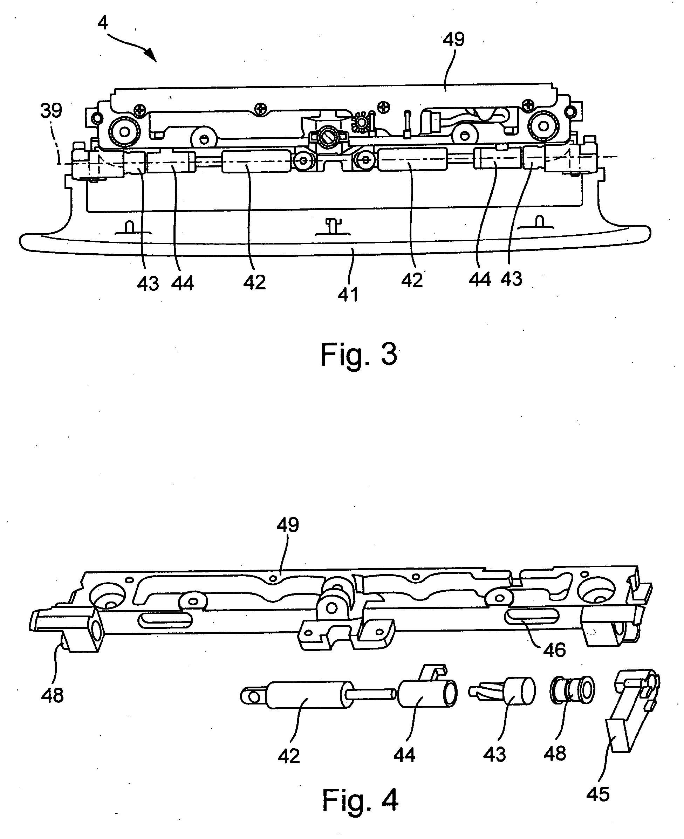

Der Aufbau der Fußstütze 4 ist in der **Figur 3** gezeigt. Die **Figur 4** zeigt Teile der Fußstütze in Explosionsdarstellung. Die Fußstütze 4 weist eine Quertraverse 49 auf. Die Fußstütze 4 ist spiegelsymmetrisch ausgebildet und haltert über zwei Drehlager 48 die Fußplatte 41. Die beiden Drehlager 48 sind zu beiden Seiten der Quertraverse 49 angeordnet und bilden eine Drehachse 39 um die die Fußplatte 41 schwenkbar ist. Die Quertraverse 49 haltert symmetrisch auf ihrer linken und rechten Seite je einen Kraftspeicher 42, eine Gewindespindel 43 und eine Mutter 44.

Der Kraftspeicher 42 weist eine Feder und ein mit dieser zusammenwirkendes Dämpfungselement auf. Der Kraftspeicher 42 wirkt mit der Mutter 44 zusammen, die über einen in eine an der Quertraverse 49 angeordnete längliche Führungsnut 46 eingreifenden Führungsarm 47 entlang der Drehachse 39 verschiebbar gelagert ist. Der Führungsarm 47 verhindert eine Drehbewegung der Mutter 44 und führt diese linear entlang der Führungsnut 46. Die Mutter 44 kämmt mit einer Gewindespindel 43, die über einen Verbindungshebel 45 mit der Fuβplatte 41 drehfest verbunden ist. Der Kraftspeicher 42 und die Gewindespindel 43 und die Mutter 44 sind in der Drehachse 39 der Fußplatte 41, entlang einer gedachten Verbindungslinie zwischen den Drehlagern 48 angeordnet.

Beim Schwenken bzw. Klappen der Fußplatte 41 von der Verstauposition in die Gebrauchsposition wird diese um die Drehachse 39 geschwenkt und dreht dabei die Gewindespindel 43 in gleichem Drehsinn mit. Diese kämmt mit der verschiebbar gelagerten Mutter 44 und bewegt diese entgegen der Kraft der Feder 42 zur Mitte der Quertraverse 49 hin. Bei Erreichen der Gebrauchsposition verrastet die Stirnseite der Mutter 44 und hält die Fußplatte 41 entgegen der Kraft der Feder 42.

Wird nun zum Zurückschwenken der Fußplatte die Verrastung gelöst und/oder überdrückt, so beaufschlagt die Feder 42 die Mutter 44 und drückt diese, durch das Dämpferelement gedämpft, nach außen. Dabei kämmt die Mutter 44 mit der Gewindespindel 43 und dreht diese zusammen mit der Fußplatte 41 in Gegenrichtung, so dass die Fußplatte 41 selbsttätig in Verstauposition klappt.

## Patentansprüche

1. Fahrzeugsitz mit einem Sitzkissen und einer an dem Sitzkissen schwenkbar befestigten Unterschenkelstütze, die zwischen einer Verstauposition und einer Gebrauchsposition vorzugsweise automatisch angetrieben verfahrbar ist,
wobei die Unterschenkelstütze an ihrem unteren Ende eine Fußstütze aufweist,
**dadurch gekennzeichnet,**
**dass** die Fußstütze (4) eine Fußplatte (41) aufweist, die um eine quer zu der Unterschenkelstütze (3) angeordnete Drehachse (39) klappbar ist und in der Verstauposition in etwa parallel und in Gebrauchsposition in etwa senkrecht zu der Unterschenkelstütze (3) angeordnet ist und wobei die Fußplatte (41) mit einem Kraftspeicher (42) verbunden ist und diesen beim Ausklappen von der Verstauposition in die Gebrauchsposition auflädt.

2. Fahrzeugsitz nach Anspruch 1,
**dadurch gekennzeichnet,**
**dass** die Fußstütze (4) eine Rastvorrichtung aufweist, die die Fußplatte (41) in Gebrauchsposition verrastet.

3. Fahrzeugsitz nach Anspruch 2,
**dadurch gekennzeichnet,**
**dass** die Fußplatte (41) nach lösen der Rastvorrichtung unter Entladung des Kraftspeichers (42) selbsttätig in Verstauposition klappt.

4. Fahrzeugsitz nach einem der Ansprüche 1 bis 3,
**dadurch gekennzeichnet,**
**dass** der Kraftspeicher (42) im Bereich der Drehachse (39) der Fußplatte (41) angeordnet ist, vorzugsweise dass die Drehachse (39) der Fußplatte (41) durch den Kraftspeicher (42) verläuft.

5. Fahrzeugsitz nach einem der Ansprüche 1 bis 4,
**dadurch gekennzeichnet,**
**dass** die Fußstütze (4) eine drehfest mit der Fußplatte (41) verbundene Gewindespindel (43) aufweist, die mit einer nicht drehbar gelagerten, von dem Kraftspeicher (42) beaufschlagten Mutter (44) kämmt und diese entlang der Drehachse (39) längs verschiebbar führt.

6. Fahrzeugsitz nach Anspruch 5,
**dadurch gekennzeichnet,**
**dass** die Gewindespindel (43) entlang der Drehachse (39) der Fußplatte (41) verlaufend angeordnet ist.

7. Fahrzeugsitz nach einem der Ansprüche 2 bis 6,
**dadurch gekennzeichnet,**
**dass** die Rastvorrichtung überdrückbar ausgebildet ist, so dass bei Auftreffen der Fußplatte (41) auf ein Hindernis die Rastvorrichtung überdrückt wird und die Fußplatte (41) von dem Kraftspeicher (42) baufschlagt selbsttätig in Verstauposition klappt.

8. Fahrzeugsitz nach einem der Ansprüche 1 bis 7,
**dadurch gekennzeichnet,**
**dass** die Fußplatte (41) über eine Sollbruchstelle mit der Unterschenkelstütze (3) verbunden ist.
